# EUROPEAN PATENT APPLICATION

(11) **EP 4 272 895 A1**
(43) Date of publication of application: **08.11.2023**
(21) Application number: 22745649.8
(22) Date of filing: 18.01.2022
(51) Int. Cl.: B23Q 17/24, B23Q 17/09

(54) **IMAGE PROCESSING DEVICE**

(30) Priority: 01.02.2021 JP 2021014083
(71) Applicant: DMG Mori Co., Ltd., Yamatokoriyama-shi, Nara 639-1160 (JP)
(72) Inventor: KUBOTA, Junichi, Yamatokoriyama-shi, Nara 639-1160 (JP)
(74) Representative: Isarpatent
(86) International application number: PCT/JP2022/001532
(87) International publication number: WO 2022/163426

(57) **Abstract**

The image processing device includes a reception unit that receives an image of a tool from a camera of a machine tool, an area calculation unit that calculates an excess area that is an area of a region corresponding to the tool in the captured image that is at least a predetermined distance away from a tool center, and an inspection unit that judges the suitability of the tool for continuous use based on the size of the excess area.

## Description

### Technical Field

This invention relates to tool inspection technology in machine tools.

### Background Art

Examples of machine tools include devices for cutting a workpiece into a desired shape and devices for depositing metal powder or the like to make a workpiece. Examples of machine tools for cutting include a turning center that machines a workpiece by applying a tool for cutting to the workpiece that is being turned, a machining center that machines a workpiece by applying a turning tool to the workpiece, and a multitasking machine including these functions in combination.

Tools are fixed to a tool holding unit such as a spindle or a tool rest. Machine tools machine a workpiece while changing tools and moving the tool holding unit according to a prepared machining program.

During machining, string-like chips may be scattered from a workpiece and entangled around the tool. A tool caught in chips needs to be replaced with another tool of the same type. After replacement, machining continues with the new tool. The user removes the chips from the tool after machining is completed (see Patent Literature 1).

### Related Art List

Patent Literature 1: JP H09-323240 A

### Summary

### Technical Problem

In many cases, if the amount of chips entangled around a tool is small, the tool can continue to be used. A small amount of chips often come off the tool spontaneously during spindle movement. Since tool replacement takes time, it is necessary to properly judge the need for tool replacement according to the amount of chips entangled around the tool (hereinafter referred to as "entangled chip amount").

### Solution to problem

An image processing device in an aspect of the present invention includes: a reception unit that receives a captured image of a tool from a camera; an area calculation unit that calculates an excess area that is an area of a region corresponding to the tool in the captured image that is at least a predetermined distance away from a tool center; and an inspection unit that judges the suitability of the tool for continuous use based on the size of the excess area.

An image processing device in another aspect of the invention includes: a reception unit that receives a plurality of captured images of a tool from a camera, the camera moving relative to a longitudinal direction of the tool; and an area calculation unit that calculates, for each of the plurality of captured images, the number of different points between a first region including a region corresponding to the tool in the captured image and a second region including a region corresponding to the tool in the reference image, an inspection unit that judges the suitability of the tool for continuous use based on the number of different points in each of the plurality of captured images.

### Advantageous Effects of Invention

According to the present invention, it becomes easier to properly judge the need for tool replacement based on the entangled chip amount.

### Brief Description of Drawings

FIG. 1 is an external view of a machine tool.
FIG. 2 is a schematic diagram illustrating a positional relation among a tool, a camera, and a lighting device in a tool recognition area.
FIG. 3 illustrates a hardware configuration of a machine tool and an image processing device.
FIG. 4 is a functional block diagram of an image processing device.
FIG. 5 is a schematic diagram illustrating a positional relation between a tool and an imaging region.
FIG. 6 is a schematic diagram illustrating an image captured during a preliminary inspection.
FIG. 7 is a schematic diagram illustrating a method for calculating the number of black pixels of a reference tool during a preliminary inspection.
FIG. 8 is a schematic diagram illustrating an image captured during an entanglement inspection.
FIG. 9 is a schematic diagram illustrating a method for calculating the number of black pixels of the used tool during the entanglement inspection.
FIG. 10 is a screen view of a reference tool image-capturing screen.
FIG. 11 is a screen view of a used tool image-capturing screen.
FIG. 12 is a graph showing the relation between the entangled chip amount and the number of black pixels.
FIG. 13 is a graph showing the relation between the entangled chip amount and the number of difference pixels.
FIG. 14 is a flowchart illustrating a process of the entanglement inspection.
FIG. 15 is a flowchart illustrating the details of image inspection in S26 of FIG. 14.
FIG. 16 is a schematic diagram illustrating an image captured during a preliminary inspection in a modified example.
FIG. 17 is a screen view of an inspection setting screen.
FIG. 18 is a first screen view of a used tool image-capturing screen in a modified example.
FIG. 19 is a second screen view of a used tool image-capturing screen in a modified example.
FIG. 20 is a third screen view of a used tool image-capturing screen in a modified example.

### Description of Embodiments

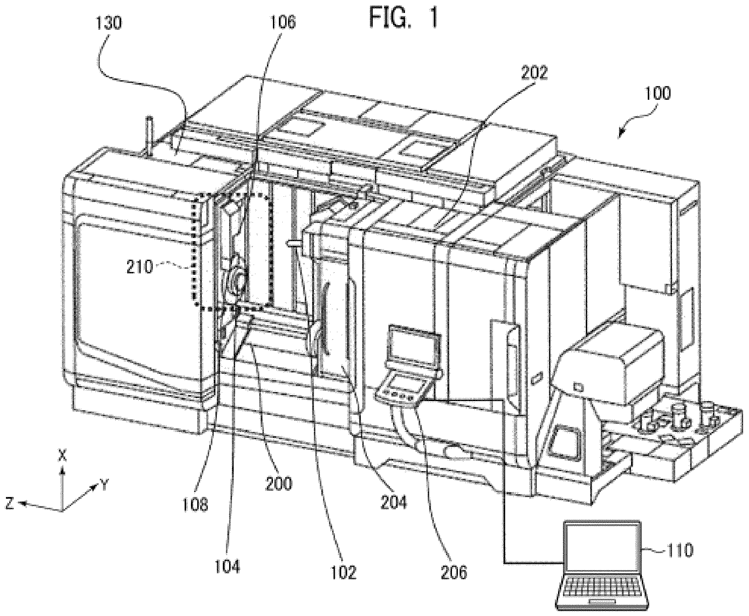

FIG. 1 is an external view of a machine tool 100. The machine tool 100 in this embodiment is a multitasking machine for machining a workpiece placed in a machining area 200. The workpiece is fixed to a holding unit 104 and cut by a tool 102 attached to a spindle, which is another holding unit. The holding unit 104 holding the workpiece is rotationally driven by a driving mechanism.

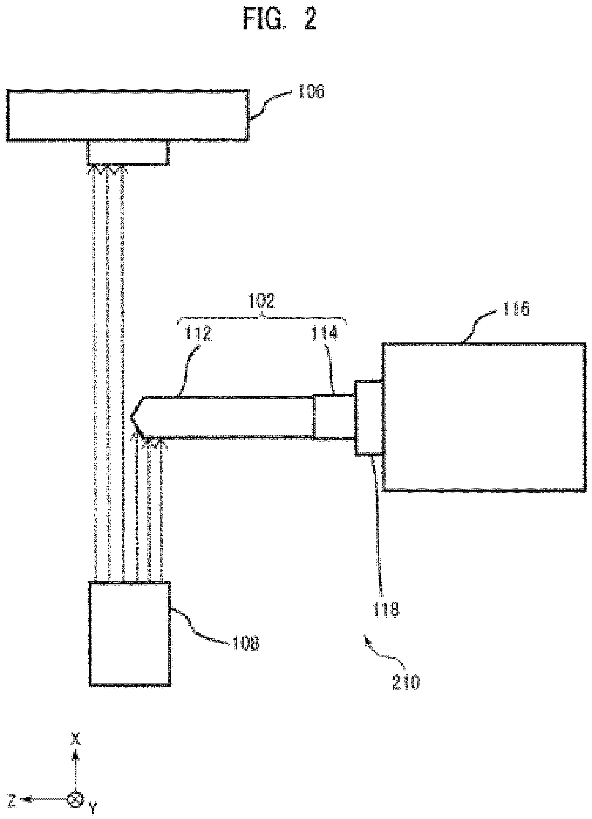

When the tool 102 is inserted into a tool recognition area 210, a lighting device 108 provided at a lower position illuminates the tool 102 and a camera 106 provided at an upper position captures an image of the tool 102. Based on the images captured at this time, tool registration, tool inspection, preliminary inspection, and entanglement inspection described later are performed. The configuration of the tool recognition area 210 will be described in more detail with reference to FIG. 2 below.

The machine tool 100 is provided with a cover 202 that shuts the machine tool 100 off from the outside. The cover 202 includes a door 204. A user opens the door 204 to install a workpiece in the machining area 200 and to remove the workpiece from the machining area 200. An operation panel 206 accepts various operations on the machine tool 100 from a user.

The operation panel 206 is connected to an image processing device 110. The user can remotely monitor the work status of the machine tool 100 with the image processing device 110. In this embodiment, the machine tool 100 main unit and the image processing device 110 are connected via a wired cable. The image processing device 110 may be formed inside the machine tool 100, e.g., as an internal device of the operation panel 206.

A tool storage unit 130 stores a plurality of tools 102. A tool 102 is selected from the plurality of tools 102 stored in the tool storage unit 130 by a tool changing unit (described later) and attached to the spindle. As shown in FIG. 1, the Y- and Z-axes are defined in the horizontal direction, and the X-axis is defined in the vertical direction. The Z-axis direction corresponds to the axial direction of the spindle and workpiece.

FIG. 2 is a schematic diagram illustrating a position relation among the tool 102, the camera 106, and the lighting device 108 in the tool recognition area 210.

The tool 102 includes a blade portion 112 used for machining the workpiece and a shank portion 114 to be fixed to a holder 118 of a spindle 116. The spindle 116 is configured to be rotatable and movable while holding the tool 102. The spindle 116 can also rotate the holding tool.

The camera 106 is equipped with an image sensor (image pickup element) such as a complementary metal oxide semiconductor (CMOS) or charge-coupled device (CCD). The camera 106 captures images of the tool 102 attached to the spindle 116 from above (in the X-axis direction). The camera 106 is connected to the image processing device 110, and the captured images are transmitted to the image processing device 110. The camera 106 is fixed to view the tool recognition area 210. The tool 102 can be imaged from a plurality of directions by rotating the tool 102 about the Z-axis with the spindle 116. In addition, a plurality of locations of the tool 102 can be imaged by moving the tool 102 in the horizontal direction (YZ direction) with the spindle 116.

The lighting device 108 is fixed at a lower position to face the camera 106. The lighting device 108 illuminates the tool 102 from below. Transmitted illumination provided by the lighting device 108 enables the camera 106 to obtain high-contrast captured images that make it easy to grasp the contour position of the tool 102.

When the user newly registers a tool 102, the user sets the tool registration mode in the operation panel 206 and attaches the tool 102 to the spindle 116. Next, the user inputs a desired tool ID. The spindle 116 moves and rotates the tool 102, and the fixed camera 106 automatically images the tool 102 from various positions and directions. From a number of captured images obtained by the camera 106, the tool shape is recognized and the tool ID and the tool shape are registered in association with each other. With such a control method, the tool shape can be automatically registered for each tool 102 in association with the tool ID. The tool shape is represented by two-dimensional or three-dimensional data. At the time of tool registration, a "preliminary inspection" is also performed, which is a prerequisite for the entanglement inspection described later, but the details are described later.

When performing an inspection on the tool 102 during or after machining, the spindle 116 also moves the tool 102 into the tool recognition area 210. As with new registration, the spindle 116 moves and rotates the tool 102, and the camera 106 automatically captures images of the tool 102 from various positions and directions. The tool shape is recognized from the numerous images captured by the camera 106. This type of inspection, which is performed as needed during machining, is referred to as "tool inspection". The user determines the degree of wear and whether or not the tool 102 contains a breakage by comparing the tool shape data at the time of tool registration with the tool shape data at the time of tool inspection.

The camera 106 in this embodiment has a resolution of about one million pixels (1224 x 1024). The imaging range is about 300 millimeters x 300 millimeters. The camera 106 can capture up to 80 images per second.

The machine tool 100 in this embodiment also performs an "entanglement inspection" to inspect the amount of chips entangled around the tool 102, in addition to the tool inspection to determine breakage or the like of the tool 102. The following description focuses on the entanglement inspection.

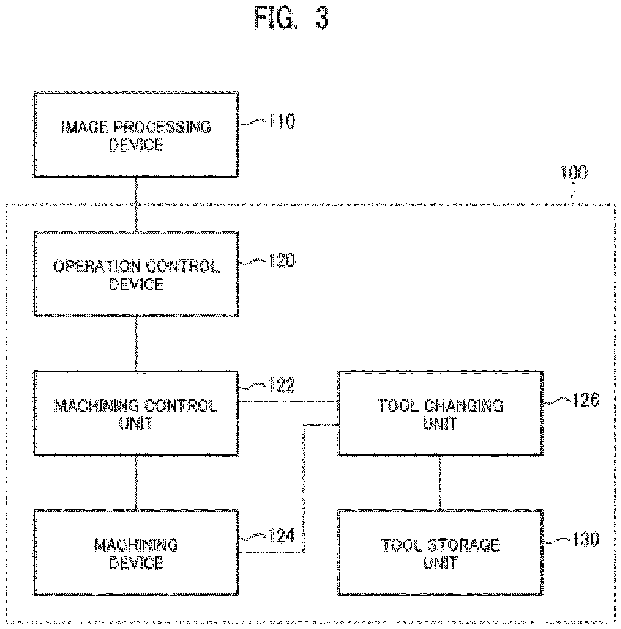

FIG. 3 illustrates a hardware configuration of the machine tool 100 and the image processing device 110. The machine tool 100 includes an operation control device 120, a machining control unit 122, a machining device 124, a tool changing unit 126, and the tool storage unit 130. The machining control unit 122, which functions as a numerical controller, transmits a control signal to the machining device 124 according to a machining program. The machining device 124 machines the workpiece by moving the spindle 116 according to instructions from the machining control unit 122.

The operation control device 120 includes the operation panel 206 and controls the machining control unit 122. The tool storage unit 130 stores tools. The tool changing unit 126 corresponds to the so-called automatic tool changer (ATC). The tool changing unit 126 takes out a tool from the tool storage unit 130 according to the change instruction from the machining control unit 122 and exchanges the tool in the spindle 116 with the tool taken out.

The image processing device 110 mainly performs image processing such as tool shape recognition. As described above, the image processing device 110 may be configured as a part of the operation control device 120. The image processing device 110 may be a typical laptop personal computer (PC) or tablet computer.

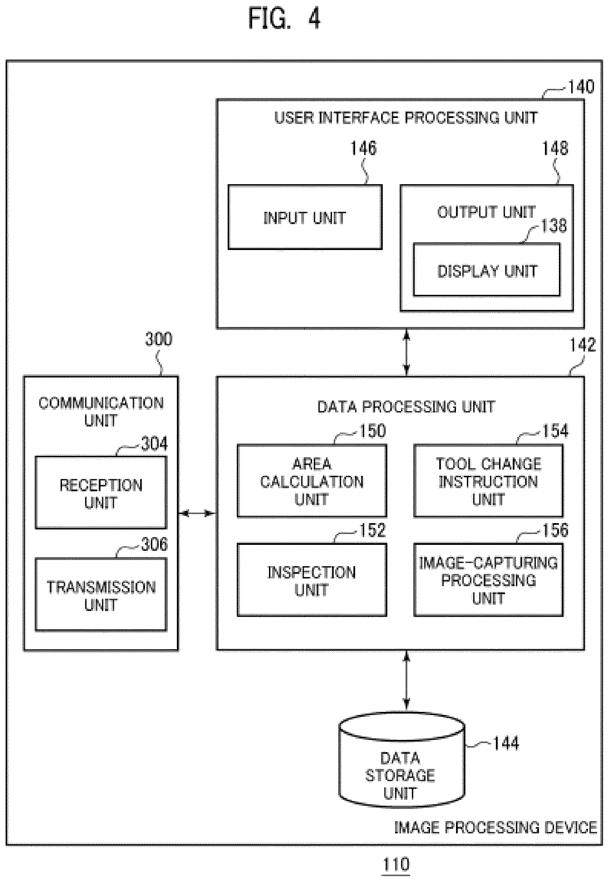

FIG. 4 is a functional block diagram of the image processing device 110.

Each component of the image processing device 110 is implemented by hardware including computing units such as central processing units (CPUs) and various computer processors, a storage device such as memories and storages, and wired or wireless communication lines that connect these units and devices, and software that is stored in the storage devices and supplies processing instructions to the computing units. Computer programs may be constituted by device drivers, operating systems, various application programs on upper layers thereof, and a library that provides common functions to these programs. Each of the blocks described later represents a functional block, not a hardware block.

Note that the operation control device 120 and the machining control unit 122 may also be implemented by hardware including a computing unit such as processors, storage units such as memory and storage, wired or wireless communication lines connecting them, and software or programs stored in the storage units to supply processing instructions to the computing units on an operating system independent from the image processing device 110.

The image processing device 110 includes a user interface processing unit 140, a data processing unit 142, a communication unit 300, and a data storage unit 144.

The user interface processing unit 140 is responsible for processing related to the user interface, such as image display and audio output, in addition to accepting operations from the user. The communication unit 300 is responsible for communication with an operation control device 120. The data processing unit 142 performs various processes based on the data acquired by the user interface processing unit 140 and the data stored in the data storage unit 144. The data processing unit 142 also functions as an interface for the user interface processing unit 140, the communication unit 300, and the data storage unit 144. The data storage unit 144 stores various programs and setting data.

The user interface processing unit 140 includes an input unit 146 and an output unit 148.

The input unit 146 accepts input from the user via a touch panel, mouse, keyboard, or other hard devices. The output unit 148 provides various kinds of information to the user via image display or audio output. The output unit 148 includes a display unit 138. The display unit 138 displays various images on the screen.

The communication unit 300 includes a reception unit 304 which receives data from the operation control device 120 and a transmission unit 306 which transmits data and commands to the operation control device 120.

The data processing unit 142 includes an area calculation unit 150, an inspection unit 152, a tool change instruction unit 154, and an image-capturing processing unit 156.

The image-capturing processing unit 156 controls the camera 106 to capture an image of the tool 102. The machining control unit 122 moves the spindle 116 directly under the camera 106, and the image-capturing processing unit 156 captures an image of the tool 102. The direction of movement of the spindle 116 may also be instructed to the machining control unit 122 from the image-capturing processing unit 156. The inspection unit 152 binarizes the captured image into white pixels and black pixels according to the luminance of each pixel in the captured image. The inspection unit 152 controls tool registration, tool inspection, preliminary inspection, and entanglement inspection. The area calculation unit 150 calculates the "excess area" described later as the amount of chips entangled around the tool 102 (entangled chip amount) from the images captured during the preliminary inspection and the entanglement inspection. The inspection unit 152 judges the suitability of the tool for continuous use based on the excess area. When the inspection unit 152 judges that continued use of the tool 102 is not suitable (hereinafter also referred to as "abnormal judgement"), the tool change instruction unit 154 instructs the machining control unit 122 to replace the tool via the operation control device 120. The machining control unit 122 instructs the tool changing unit 126 to replace the tool that has been judged to be abnormal.

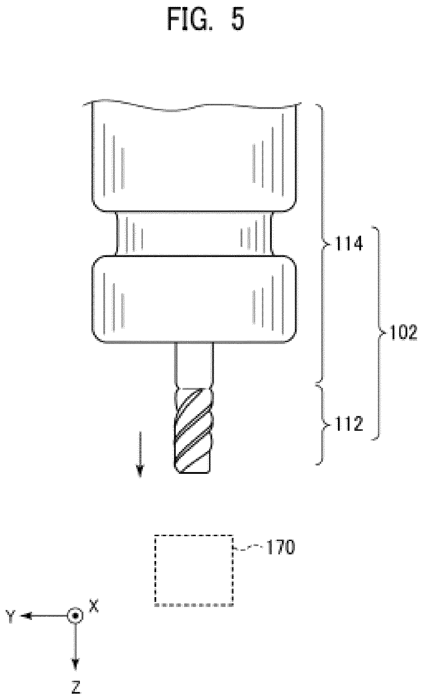

FIG. 5 is a schematic diagram illustrating a positional relation between the tool 102 and an imaging region 170.

The imaging region 170 is located just below the lightreceiving surface of the camera 106. The camera 106 images an object within the imaging region 170. The machining control unit 122 inserts the tool 102 into the imaging region 170 by moving the spindle 116. Since the imaging region 170 is smaller than the tool 102, it is not possible to image the entire tool 102 at one time.

Enlarging the lens of the camera 106 to enlarge the imaging region 170 will increase the cost of the camera 106. In addition, installing a large camera 106 occupying a large space in the tool recognition area 210 is undesirable since this will reduce the space of the machining area 200. Therefore, in the present embodiment, a scheme is adopted in which the tool 102 is imaged by a relatively small camera 106 a plurality of times, and the shape of the entire tool 102 is recognized on the basis of the plurality of the images captured a plurality of times.

Hereafter, the captured image of a part of the tool 102 imaged by the camera 106 will be referred to as a "partial image".

During the preliminary inspection and the entanglement inspection, the machining control unit 122 moves the tool 102 (spindle 116) along the positive Z-axis direction, i.e., along the longitudinal direction of the tool 102, at a constant speed. The longitudinal direction here means the axial direction of the tool 102. In FIG. 5, the longitudinal direction of the tool 102 coincides with the Z-axis direction. Further, in this embodiment, the direction of the tool length of the tool 102 coincides with the longitudinal direction. The image-capturing processing unit 156 constantly monitors the imaging region 170. Live view images in the imaging region 170 are transmitted from the camera 106 to the image processing device 110.

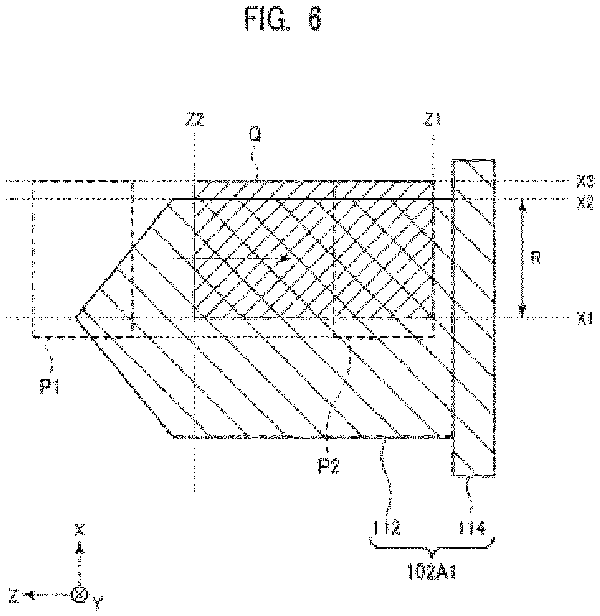

FIG. 6 is a schematic diagram of the image captured during a preliminary inspection.

The inspection unit 152 performs an entanglement inspection on the tool 102 during or after machining at a predetermined timing. Although the timing of the entanglement inspection is freely selected, in this embodiment, it is explained that the entanglement inspection is performed when the continuous use time of a tool 102A exceeds a predetermined time, e.g., 3 minutes. In other words, when a tool 102A is replaced with another tool 102B when it has been in use for less than 3 minutes, no entanglement inspection is performed on the tool 102A. When the tool 102A is judged to be abnormal in the entanglement inspection, a spare tool 102A of the same type as the tool 102A is replaced to continue the machining.

After the tool registration is completed, the inspection unit 152 also performs a preliminary inspection, which is a prerequisite for the entanglement inspection. The contents of the preliminary inspection and the entanglement inspection are basically the same, but the details are described later. By comparing the result of the preliminary inspection with the result of the entanglement inspection, the inspection unit 152 calculates the entangled chip amount and makes an abnormal/normal judgment based on the entangled chip amount.

Hereafter, the tool 102 at the time of tool registration, or in other words, the tool 102 in a state where no chips are entangled around it at all, is referred to as the "reference tool". In addition, the tool 102 that is actually used to machine the workpiece after tool registration is completed, or in other words, the tool 102 which may have chips entangled around it, is referred to as the "used tool". FIG. 6 illustrates an image of a tool 102A1 (one of the A-type tools 102) captured during a preliminary inspection. Hereafter, the X coordinate value of the centerline of the tool 102A1 is referred to as "X1" and the radius of tool 102A1 is referred to as "R". Therefore, the X coordinate value X2 of the contour line of the tool 102A is "X1 + R".

After tool registration of the tool 102A1, the inspection unit 152 performs a preliminary inspection on the tool 102A1. The image-capturing processing unit 156 instructs the operation control device 120 to move the spindle 116 linearly in the Z-axis direction. After detecting the tip of the blade portion 112 in the imaging region 170 (live view image), the image-capturing processing unit 156 instructs the camera 106 to capture an image (partial image). The camera 106 captures the first partial image upon receiving the instruction and fixes it in memory. In FIG. 6, the first partial image is captured at a predetermined start position P1. The start position P1 is defined, e.g., as a position where the Z-distance between the tip point of the tool 102A1 and the center point of the captured image reaches a predetermined value.

After capturing the partial image at the start position P1, the machining control unit 122 slowly moves the spindle 116 (tool 102A1) linearly in the positive Z-axis direction. The image-capturing processing unit 156 continuously captures partial images in conjunction with the movement of the tool 102A1. The last partial image is acquired at the predetermined end position P2. The group of partial images obtained from the start position P1 to the end position P2 provides the captured image including a contour of a part of the blade portion 112.

The area calculation unit 150 sets an inspection region Q as a part of the imaging range for the obtained plurality of partial images. The inspection region corresponds to the range of the X coordinates X1 to X3 and the Z coordinates Z1 to Z2. The positions of Z1 and Z2 may be set at any position, but Z2 is preferably set at a position that does not include the shank portion 114. The position of X3 is set at any position where X3 > X2 = X1 + R.

If the camera 106 is a wide-angle camera, the entire inspection region Q may be captured in a single image capturing. If the imaging region 170 is smaller than the field of view of the camera 106 as in the present embodiment, the tool 102 may be image-captured a plurality of times by moving the spindle 116, and the image-capturing processing unit 156 may combine the captured images corresponding to the inspection region Q from a plurality of partial images.

In the preliminary inspection and entanglement inspection, all or part of the region corresponding to the tool 102 is subject to imaging. In FIG. 6, the "region corresponding to the tool 102" may be the entire region of the blade portion 112 and the shank portion 114, or may be any region as long as the region includes the inspection region Q.

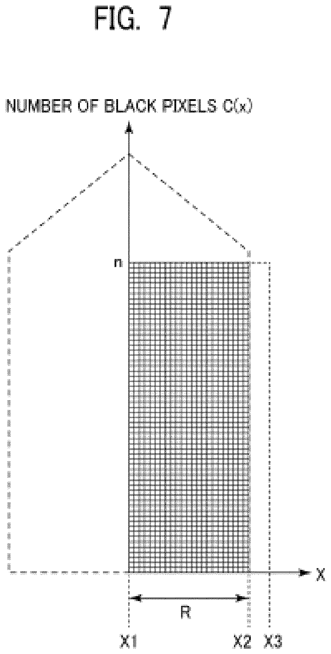

FIG. 7 is a schematic diagram illustrating a method for calculating the number of black pixels of a reference tool during a preliminary inspection.

The area calculation unit 150 binarizes each pixel of the captured image corresponding to the inspection region Q based on luminance. In this method, each pixel of the captured image is either a black pixel or a white pixel. In the case of a reference tool, the black pixel is the pixel corresponding to the position of the tool 102 (hereinafter referred to as "tool pixel").

Hereafter, the coordinates (x, z) of the pixel in the captured image corresponding to the inspection region Q are referred to as the pixel coordinates. The x and z here are referred to as the x-pixel coordinates and z-pixel coordinates, respectively.

Let x1 be the X pixel coordinate corresponding to the center axis of tool 102A1. The number of black pixels for which X pixel coordinate = x1 is n. In other words, the number of black pixels corresponding to the position on the X coordinate of X1 (central axis) and the Z coordinates of Z1 to Z2 is n. The number of black pixels with X pixel coordinates = x1 + 1 is also n. When the x-coordinate is greater than X2 (= X1 + R), in other words, outside the contour line of tool 102A1, the number of black pixels is zero. This is because there are no objects outside of the tool 102A1 that are reflected in the captured image (see also FIG. 6).

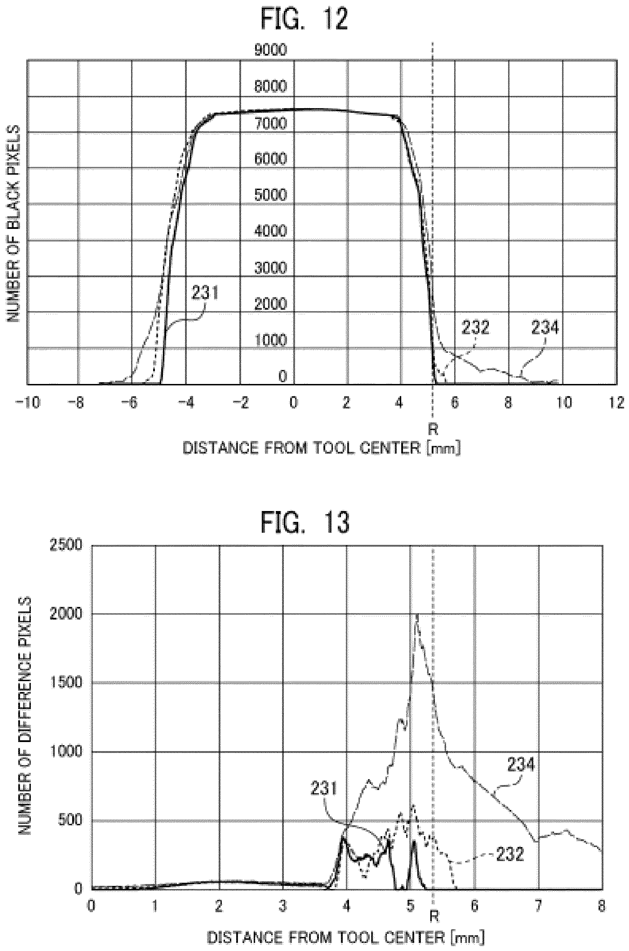

Hereafter, the number of black pixels detected at the X pixel coordinate x in the inspection region Q is denoted as "C(x)". In FIG. 7, C(x) = n for X1 ≤ x ≤ X2 and C(x) = 0 for x > X2. In practice, C(x) > 0 even for x > X2 due to various image noise generated during image capturing of the tool 102A1; the measurement results including noise are described later with respect to FIGS. 12 and 13.

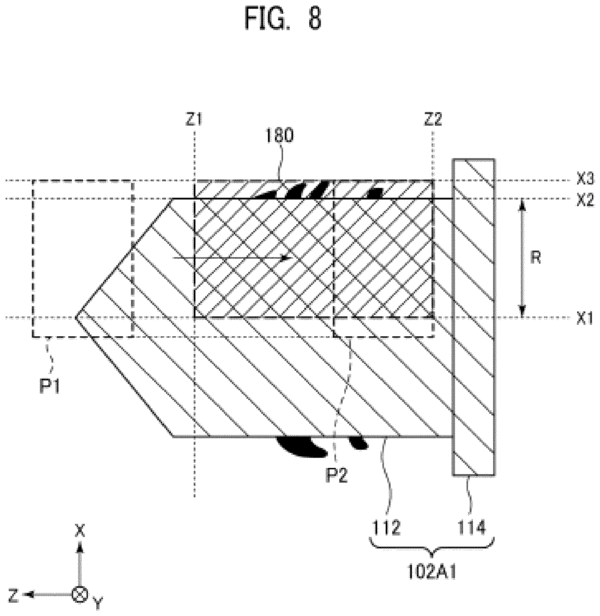

FIG. 8 is a schematic diagram illustrating an image captured during an entanglement inspection.

Black pixels are identified from the inspection region Q of the tool 102A1 by the preliminary inspection explained in connection with FIGS. 6 and 7. As described above, the inspection unit 152 performs an entanglement inspection on the tool 102A1 at a predetermined time.

FIG. 8 shows an image captured during the entanglement inspection of the tool 102A1. Chips 180 are stuck to tool 102A1. During the entanglement inspection, the image-capturing processing unit 156 also instructs the operation control device 120 to move the tool 102A1 linearly in the Z-axis direction. After detecting the tip of the blade portion 112 in the imaging region 170 (live view image), the image-capturing processing unit 156 instructs the camera 106 to capture an image (partial image). The camera 106 captures the first partial image upon receiving the instruction and fixes it in memory.

The machining control unit 122 moves the tool 102A1 linearly in the Z-axis positive direction. The image-capturing processing unit 156 continuously captures partial images in conjunction with the movement of the tool 102A1. The area calculation unit 150 sets the inspection region Q of the tool 102A1 in the range of X1 to X3 and Z1 to Z2. The inspection region Q during the preliminary inspection and the inspection region Q during the entanglement inspection are the same.

In the entanglement inspection, not only the tool 102A1 but also the chips 180 are reflected in the captured image. The area calculation unit 150 binarizes the captured image and classifies it into black pixels and white pixels. Most of the black pixels correspond to the tool 102A1, but some correspond to the chips 180.

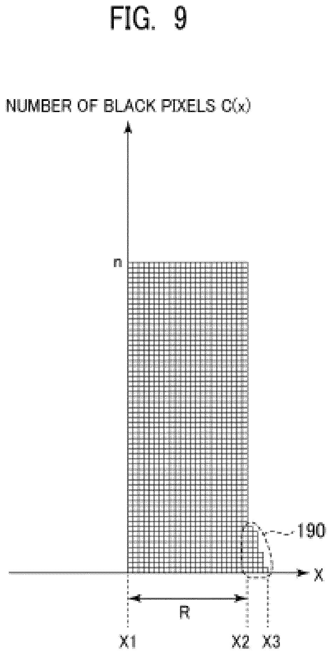

FIG. 9 is a schematic diagram illustrating a method for calculating the number of black pixels of the used tool during the entanglement inspection.

Pixels corresponding to the location of the chips 180 are referred to as "chip pixels". C(x) = n for X1 ≤ x ≤ X2. This is the same as for the reference tool. The black pixels detected in the range X1 ≤ x ≤ X2 are tool pixels. On the other hand, a small number of black pixels are detected even for x > X2, i.e., outside the contour line of tool 102A1. These are the chip pixels corresponding to the chips 180. Hereafter, the tool pixels detected outside of X2 are referred to as "excess pixels". Most of the excess pixels are chip pixels, but there may be a small number of objects other than chips or noise. The excess pixel group 190 shown in FIG. 9 is a set of excess pixels. The total number of excess pixels is referred to as "excess area".

The area calculation unit 150 calculates the excess area S1 of the tool 102A1 (reference tool) at the time of the preliminary inspection and the excess area S2 of the tool 102A1 (used tool) at the time of the entanglement inspection, respectively. The larger the amount of the chips 180 entangled around the tool 102A1, the larger the excess area S2. As shown in FIG. 7, the ideal excess area S1 of the reference tool is "0".

A threshold T1 is set in advance. The inspection unit 152 judges the tool 102A1 to be "abnormal" when S2 (excess area of the used tool) - S1 (excess area of the reference tool) > the threshold T1. In this case, the tool 102A1 should be replaced with another tool 102A2 of the same type.

More specifically, first, for the reference tool, an image of the inspection region Q is captured. The area calculation unit 150 acquires the luminance value of each pixel (x, z) in the captured image. The area calculation unit 150 counts the number of black pixels having a luminance value less than a predetermined threshold. Next, images of the inspection region Q are captured in the same manner for the used tool. The area calculation unit 150 acquires the luminance value of each pixel (x, z) in the captured image. The area calculation unit 150 counts the number of black pixels having a luminance value less than a predetermined threshold. The inspection unit 152 compares the black pixels of the used tool and the black pixels of the reference tool for each coordinate and counts the number of pixels that differ. The difference at this time corresponds to "S2 - S1". Hereafter, the difference between the excess area S2 and the excess area S1 is referred to as "the number of difference pixels D" or "difference D". When the difference D is greater than the threshold T1, the entangled chip amount is considered to be very large, and the tool 102A1 is judged to be abnormal (not suitable for continuous use).

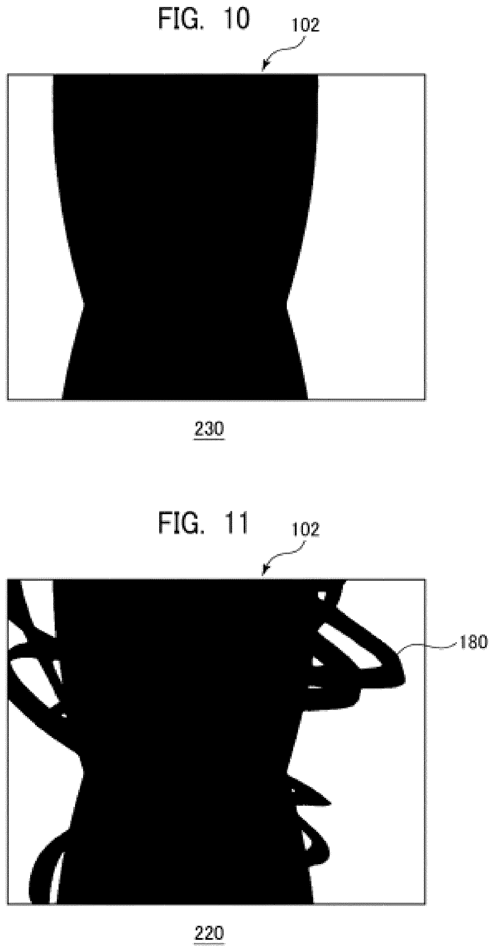

FIG. 10 is a screen view of a reference tool image-capturing screen 230.

The image-capturing processing unit 156 captures images of the tool 102, and the display unit 138 displays the captured images. The reference tool image-capturing screen 230 represents an image of the tool 102 that has no chips entangled around it, e.g., the reference tool at the time of preliminary inspection. As described above, the area calculation unit 150 calculates the excess area based on the captured image. The display unit 138 may display the excess area S1 on the reference tool image-capturing screen 230.

FIG. 11 is a screen view of a used tool image-capturing screen 220.

The used tool image-capturing screen 220 is an image of the tool 102 with the chips 180 entangled around it. The used tool image-capturing screen 220 is displayed when the used tool is imaged during the entanglement inspection. The area calculation unit 150 also calculates the excess area S2 for the used tool. The display unit 138 may display the excess area S2 on the used tool image-capturing screen 220. The display unit 138 of the image processing device 110 may display the reference tool image-capturing screen 230 and the used tool image-capturing screen 220 in parallel. In this case, the display unit 138 displays the excess area S1 of the reference tool and the excess area S2 of the used tool, as well as the difference D between them. The user freely sets the threshold T1 while comparing the reference tool image-capturing screen 230 (reference tool) with the used tool image-capturing screen 220 corresponding to various entangled chip amounts. The input unit 146 accepts the input of the threshold T1 and sets this as an internal parameter of the inspection unit 152. Once the threshold T1 is set, the inspection unit 152 judges the suitability of the used tool for continuous use based on the threshold T1.

FIG. 12 is a graph showing the relation between the entangled chip amount and the number of black pixels.

The horizontal axis is the tool radial direction (X-axis direction) and the vertical axis is the number of black pixels per X-pixel coordinate. The black pixels include both tool pixels corresponding to the tool 102 and chip pixels corresponding to the chip 180. Graph 231 is the number of black pixels for the tool 102A1 with almost no chips entangled around it. Graph 232 is the number of black pixels of the tool 102A1 with a few chips entangled around it but still usable. Graph 234 is the number of black pixels of the tool 102A1 that has a large amount of chips entangled around it and needs to be replaced. The graphs in FIG. 12 correspond to those schematically shown in FIGS. 7 and 9.

As shown in FIG. 12, the number of black pixels decreases sharply when the distance from the tool center exceeds R (tool diameter). As for graph 234, the number of black pixels remains even when the distance from the tool center exceeds R. This is because a large number of chip pixels are detected outside the tool contour. It should be noted that, as shown in the reference tool image-capturing screen 230, even when the tool 102A1 has no chips entangled around it, a small number of excess pixels are detected. This is because noise is generated due to variations in imaging conditions and binarization of the image. Therefore, a small number of excess pixels as noise are detected in graph 231 as well. Even for the reference tool, the excess area S1 is not actually zero.

FIG. 13 is a graph showing the relation between the entangled chip amount and the number of difference pixels.

FIG. 13 shows the difference D (number of difference pixels) of black pixels between the tool 102A1 as the reference tool and the tool 102A1 as the used tool corresponding to graph 231, graph 232, and graph 234 in FIG. 12. The larger the entangled chip amount, the more excess pixels are detected around the tool diameter R, especially outside the tool diameter R.

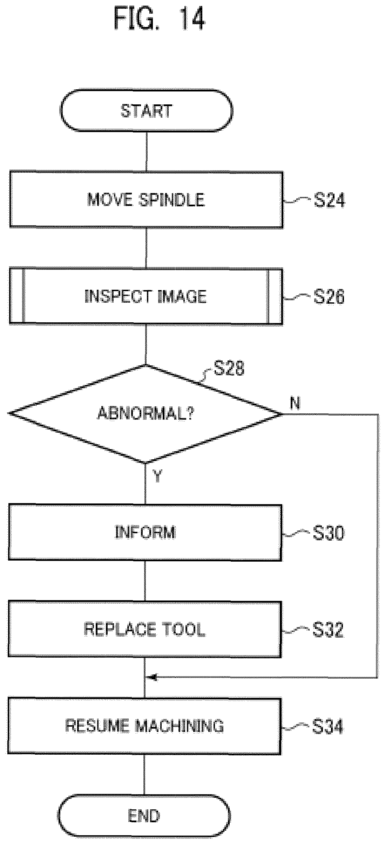

FIG. 14 is a flowchart illustrating a process of the entanglement inspection.

At the execution timing of the entanglement inspection, the machining control unit 122 moves the spindle 116 to the tool recognition area 210 (S24). After inserting the spindle 116 into the tool recognition area 210, the machining control unit 122 notifies the operation control device 120 that it is ready for operation.

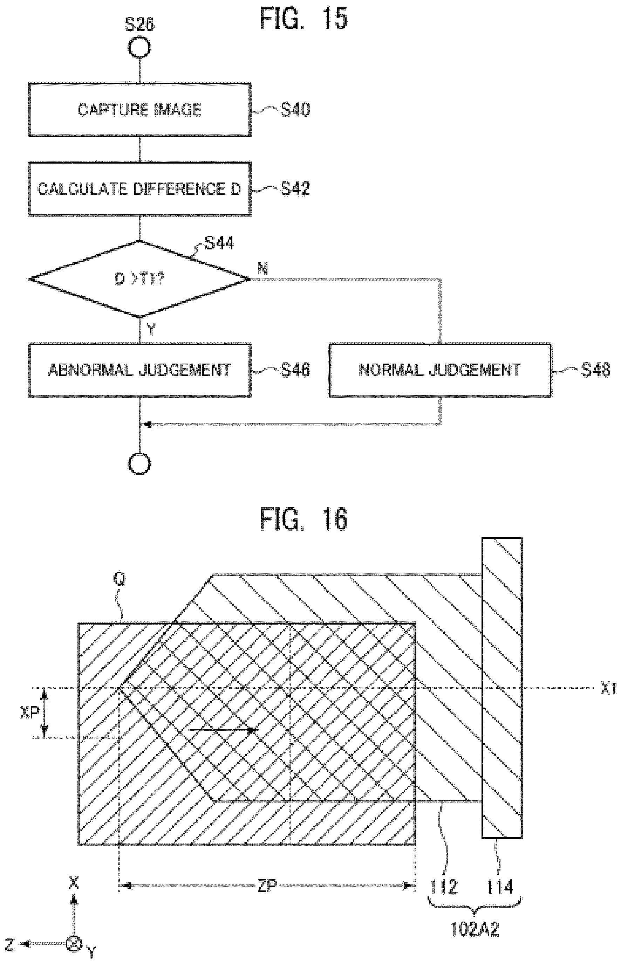

The inspection unit 152 performs image inspection of the tool 102 (S26). In the image inspection, the inspection unit 152 judges the suitability of the used tool for continuous use. Details of the image inspection are explained with reference to FIG. 15 below.

If the result of the image inspection is an abnormal judgment (Y in S28), the display unit 138 informs the user that a large amount of chips or a large chip is entangled around the used tool (S30). The image-capturing processing unit 156 then instructs the machining control unit 122 to replace the tool (S32) via the operation control device 120. The tool changing unit 126 replaces the used tool (the tool 102A1 with a large amount of chips entangled around it) with a spare tool 102A2 of the same type stored in the tool storage unit 130.

When the result of the image inspection is a normal judgment (N in S28), the processes in S30 and S32 are skipped.

FIG. 15 is a flowchart illustrating the details of image inspection in S26 of FIG. 14.

The image-capturing processing unit 156 captures an image of the tool 102 and obtains an image corresponding to the inspection region Q (S40). The area calculation unit 150 calculates the excess area S2 of the used tool and calculates the difference D between the excess area S1 previously obtained in the preliminary inspection and the excess area S2 (S42). When the difference D is greater than the threshold T1 (Y in S44), the inspection unit 152 judges the used tool to be abnormal (S46). When the difference D is less than the threshold T1 (N in S44), the inspection unit 152 judges the used tool to be normal (can be used continuously) (S48). As described above, the tool replacement is executed when an abnormal judgment is made.

### SUMMARY OF EMBODIMENT

The machine tool 100 and the image processing device 110 have been described based on the embodiments described above.

Chips entangled around the tool 102 may damage the workpiece. On the other hand, if the tool 102 were to be replaced even when only a few chips were entangled around it, machining efficiency would be reduced. According to the present embodiment, the image processing device 110 can recognize the amount of chips entangled around the tool 102 and automatically judge the suitability of the used tool for continuous use. This control method is able to achieve both high machining efficiency and safety on the machine tool 100.

In addition, the user can intuitively set an appropriate threshold T1 by referring to the excess area S1, S2 or the difference D together with the image of the tool 102 on the reference tool image-capturing screen 230 and the used tool image-capturing screen 220.

The present invention is not limited to the embodiment described above and modifications thereof, and any component thereof can be modified and embodied without departing from the scope of the invention. Components described in the embodiment and modifications can be combined as appropriate to form various embodiments. Some components may be omitted from the components presented in the embodiment and modifications.

### Modifications

In the above embodiment, when the difference D (= S2 - S1) > threshold T1, the inspection unit 152 judges the tool 102A1 to be abnormal. As a modification, the inspection unit 152 may calculate the difference D2 = S2 / S1. An appropriately selected threshold T2 may be set, and when D2 > T2, the inspection unit 152 may judge the tool 102A1 to be abnormal.

The image processing device 110 periodically performs a tool inspection to determine if the tool 102 contains a breakage. The image processing device 110 may instruct the machine tool 100 to perform an entanglement inspection during a tool inspection. If an abnormality is detected during machining, the inspection unit 152 of the image processing device 110 may perform an entanglement inspection. For example, an acceleration sensor may be incorporated into the spindle 116, and the camera 106 may periodically report the acceleration to the image processing device 110. The inspection unit 152 of the image processing device 110 may perform an entanglement inspection when the acceleration of the spindle 110 exceeds a predetermined threshold, because there may be a possibility that interference of the tool 102 has occurred. A sound-collecting microphone may be provided in the machining area, and the image processing device 110 may perform an entanglement inspection when an unusual sound (such as an audio above a predetermined volume or in a predetermined frequency band) is generated.

After machining with tool 102A1, an entanglement inspection may be performed when the tool 102A1 is to be changed to another tool 102B. For example, assume that the tool 102A2, which is the same type of tool as the tool 102A1, is stored in the tool storage unit 130. When the tool 102A1 is changed to the tool 102B, an entanglement inspection is performed on the tool 102A1. When the tool 102A1 is judged to be abnormal, after the tool changing unit 126 exchanges the tool 102A1 to the tool 102B, the operation control device 120 sets the status data of the tool 102A1 to "unusable". The next time the tool 102A1 is needed, the tool changing unit 126 selects the tool 102A2 of the same type instead of the unusable tool 102A1. When the tool 102A2 is judged to be abnormal due to chips entangled around the tool 102A2, the tool 102A2 is also set to "unusable". After completing a series of machining operations, the user removes chips from the tool 102 that is set to "unusable" in the tool storage unit 130. After this, the user may change the status of the tools 102A1 and 102A2 from "unusable" to "usable" by operating the image processing device 110 or the operation control device 120.

In the above embodiment, the position of the tool diameter R was set as the boundary line, and the area calculation unit 150 detected black pixels located outside the boundary line (the tool diameter R) as excess pixels. The boundary line between excess pixels and tool pixels is not limited to the tool diameter R, but may be set freely by the user.

In the above embodiment, it was explained that the camera 106 is fixed and the spindle 116 is moved toward the camera 106 to capture an image of the tool 102. As a modification, a movable camera 106 may be used. The data processing unit 142 may be equipped with a camera control unit (not shown), and the camera control unit may move the camera 106 toward the tool 102 to capture an image of the tool 102 during the tool inspection.

When the excess area is large, e.g., S2 (excess area of the used tool) - S1 (excess area of the reference tool) > threshold T3, the transmission unit 306 may transmit a control signal to the operation control device 120 instructing the spindle 116 to move to a predetermined position in the machining area 200 and to rotate at a high speed there. The rotation speed is freely selected, and may be set in the range of 500 to 2,000 rpm, for example. Upon receiving this control signal, the operation control device 120 causes the machining control unit 122 to perform the above control. The inspection unit 152 may repeat the entanglement inspection after a predetermined number of rotations. The rotary motion of the spindle 116 may remove the chips 180 from the tool 102. When the excess area is small in the repeated entanglement inspection, e.g., S2 - S1 ≤ T3, the inspection unit 152 may determine that this tool 102 can continue to be used.

The output unit 148 may be equipped with a reporting unit (not shown). The reporting unit may provide the user with a message such as "Chips may be entangled around the tool" if S1 - S2 > T1 is met in the entanglement inspection. Reporting can be done in either or both audio and text.

In the following, the modifications of the method for detecting the entanglement of the chips around the tool 102 and breakage of the tool 102 will be described.

FIG. 16 is a schematic diagram illustrating an image captured during a preliminary inspection in a modified example.

In this modification, the inspection unit 152 also performs an entanglement inspection on the tool 102 during or after machining at a predetermined time. The inspection unit 152 also performs a preliminary inspection during tool registration.

FIG. 16 shows an image of one tool 102A2 (one of the A-type tools 102) during the preliminary inspection. In FIG. 16, the X coordinate value of the centerline of the tool 102A2 is also "X1".

After tool registration of the tool 102A2, the inspection unit 152 performs a preliminary inspection of the tool 102A2. In the preliminary inspection, the image-capturing processing unit 156 moves the spindle 116 linearly in the Z-axis direction, i.e., in the longitudinal direction of the tool 102. Here, the difference in the coordinate values between the centerline of the imaging region and the centerline of the tool 102A2 is defined as "XP". The difference XP can be freely set by the user using the method described later.

After adjusting the spindle 116 in the X-axis direction according to the difference XP, the machining control unit 122 moves the spindle 116 in the Z-axis direction based on a movement value ZP. The movement value ZP can also be freely set by the user by the method described later. The image-capturing processing unit 156 continuously captures partial images in conjunction with the movement of the tool 102A2. That is, a plurality of partial images are captured in the process of moving the tool 102 in its longitudinal direction. Hereafter, the partial images obtained during the preliminary inspection are referred to as "reference images".

In this way, during the preliminary inspection, a plurality of partial images are acquired as reference images for the inspection region Q defined by the difference XP and the movement value ZP. At the time of the preliminary inspection, there is no chip entanglement around the tool 102 nor breakage of the tool 102.

In the entanglement inspection, a plurality of partial images are captured for the same inspection region Q as in the preliminary inspection. During the entanglement inspection, a plurality of partial images are also captured during the process of moving the tool 102 in the longitudinal direction. Hereafter, the partial images captured during the entanglement inspection are referred to as "verification images". During the entanglement inspection, there is a possibility that chips may be entangled around the tool 102.

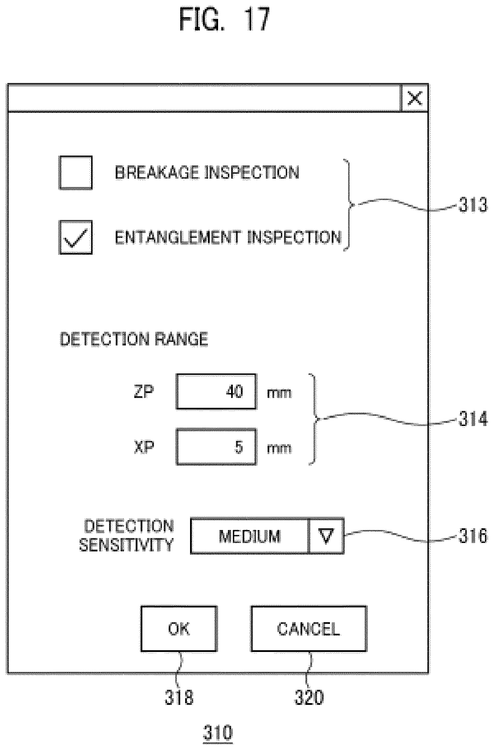

FIG. 17 is a screen view of an inspection setting screen 310.

The user can set an inspection target, inspection range, and detection sensitivity on the inspection setting screen 310 prior to the preliminary inspection. The display unit 138 displays the inspection setting screen 310. The inspection setting screen 310 includes an inspection selection section 313, a range setting section 314, and a detection sensitivity setting section 316. In the inspection selection section 313, the user sets whether or not to require "breakage inspection" and "entanglement inspection" as inspection items, respectively. In FIG. 17, only the entanglement inspection is selected. The breakage inspection is described later.

In the range setting section 314, the user defines the inspection region Q by setting the difference XP and the movement value ZP. In the detection sensitivity setting section 316, the user selects the inspection sensitivity from the options "high," "medium," or "low". In this modification, the inspection unit 152 compares the reference image and the verification image and determines the size of the chip entanglement based on the amount of difference in the number of black pixels in each image.

For example, the number of pixels as the threshold is set to T1 for "high" inspection sensitivity, T2 (>T1) for "medium" inspection sensitivity, and T3 (>T2) for "low" inspection sensitivity. In the modified example, instead of the area calculation unit 150, a "calculation unit" performs the entanglement judgment by calculating the number of different points (see below) instead of the excess area. That is, in this modification, the "area calculation unit" in the functional block diagram of the image processing device 110 shown in FIG. 4 is changed to the "calculation unit". The calculation unit compares the reference image and the verification image captured at the same position and calculates the number of different points, which is the difference in the number of pixels between the second region corresponding to the black pixels in the reference image and the first region corresponding to the black pixels in the verification image. The black pixels here are identified by the same method as that explained in connection with FIG. 7.

The first region may contain chips entangled around the tool 102 as well as the tool body. On the other hand, the second region corresponds to the tool 102 only, since there are no chips entangled around the tool 102 at the time of preliminary inspection. Depending on the number of different points, which is the difference in the number of black pixels in the first and second regions, the inspection unit 152 determines whether the tool 102 is normal (can be used continuously) or not. If there are no chips entangled around the tool, ideally, the first and second regions are perfectly matched and the number of different points is zero. That is, the first and second regions should match and correspond to the tool 102, and when chips or the like are entangled around the tool 102, the first region will be larger than the second region.

The user touches Setting button 318 to activate the entered setting values. At this time, the image-capturing processing unit 156 and the inspection unit 152 store the setting values in the data storage unit 144. The user touches Cancel button 320 to cancel the setting.

A breakage inspection method will be described later, and an entanglement inspection method will be explained first with specific examples.

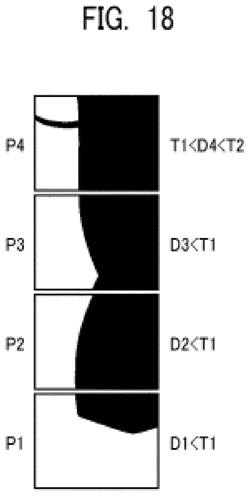

FIG. 18 is a first screen view of a used tool image-capturing screen in a modified example.

In FIG. 18, verification images P1 to P4 are captured. Reference images V1 to V4 (not shown) have been captured in advance at the same imaging positions as the verification images P1 to P4. The calculation unit compares the second region in the reference image V1 with the first region in the verification image P1. More specifically, the inspection unit 152 calculates the number of different points D1 in the number of pixels between the first and second regions, where the first region is the black pixel region that is below a predetermined threshold luminance in the verification image P1 and the second region is the black pixel region that is below the threshold luminance in the reference image V1.

If chip entanglement occurs at the tip of the tool 102, the number of different points D1 becomes large. If there is no chip entanglement, the number of different points D1 is small, even after taking into account the effects of image noise or the like. Since D1 < T1 in FIG. 18, the inspection unit 152 does not detect chip entanglement in the verification image P1, regardless of whether the detection sensitivity is high, medium, or low. In FIG. 18, because there is almost no chip entanglement at the tip of the tool 102, the first region in the verification image P1 corresponds almost perfectly to the second region in the reference image V1.

The number of different points D4 between the verification image P4 and the reference image V4 is larger than the threshold T1 and smaller than the threshold T3. Therefore, when the detection sensitivity is set to "high (T1)," the inspection unit 152 judges that this tool 102 is not suitable for continued use because chips are entangled around the tool 102. On the other hand, when the detection sensitivity is set to "medium (T2)" or "low (T3)," the inspection unit 152 judges that the tool 102 is suitable for continuous use. The inspection unit 152 compares the number of different points D and the threshold for the verification images P1 to P4 in turn, and judges the tool 102 to be unusable when a difference exceeding the threshold is detected for any of the verification images.

The user can freely set the judgment criteria for continued use of the tool 102 by setting the detection sensitivity.

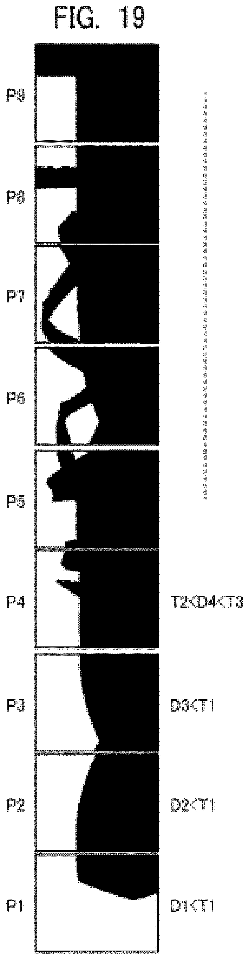

FIG. 19 is a second screen view of a used tool image-capturing screen in a modified example.

In FIG. 19, the movement value ZP is set larger than in the inspection shown in FIG. 18, so that verification images P1 to P9 and reference images V1 to V9 (not shown) are captured. The number of different points D4 in the number of pixels between the first region of the verification image P4 and the second region of the reference image V4 is larger than the threshold T2 and smaller than the threshold T3. Therefore, when the detection sensitivity is set to "high (T1)" or "medium (T2)", the inspection unit 152 judges that the tool 102 is not suitable for continuous use. When the detection sensitivity is set to "low (T3)", the inspection unit 152 determines that the tool 102 is suitable for continuous use.

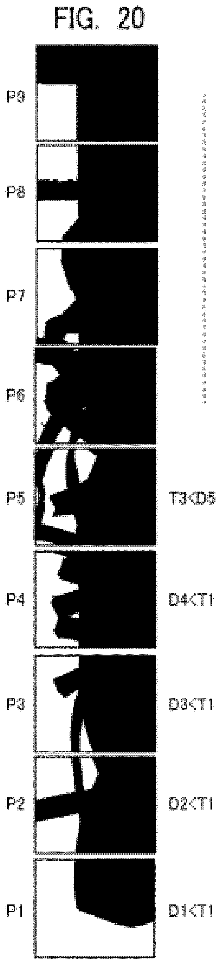

FIG. 20 is a third screen view of a used tool image-capturing screen in a modified example.

In FIG. 20, the verification images P1 to P9 and reference images V1 to V9 (not shown) are also captured because the movement value ZP is set larger than in the inspection shown in FIG. 18. The number of different points D5 in the number of pixels between the first region of the verification image P5 and the second region of the reference image V5 is greater than the threshold T3. Therefore, regardless of whether the detection sensitivity is set to "high (T1)", "medium (T2)", or "low (T3)", the inspection unit 152 judges the tool 102 to be not suitable for continuous use based on the verification image P5.

Thus, the inspection unit 152 subtracts the number of black pixels in the second region of the reference image from the number of black pixels in the first region of the verification image, and judges that the amount of chips entangled around the tool 102 is so large that the tool 102 is not suitable for continuous use if the number of different points D is greater than the threshold.

On the other hand, when the tool 102 contains a breakage, the number of black pixels included in the first region of the verification image is less than the number of black pixels included in the second region of the reference image. When breakage detection is selected on the inspection setting screen 310, the inspection unit 152 subtracts the number of black pixels in the first region of the verification image from the number of black pixels in the second region of the reference image, and compares the number of different points E with the threshold. When the number of different points E is greater than the threshold, the inspection unit 152 judges that the tool 102 contains a breakage so that it is not suitable for continued use. The threshold for the breakage inspection also changes according to the setting of the detection sensitivity setting section 316 in the inspection setting screen 310.

As described above, in the modified example, the inspection unit 152 compares the reference image captured at the time of tool registration and the verification image captured at the time of the entanglement inspection and breakage inspection to determine whether chip entanglement or breakage of the tool 102 is occurring based on the number of different points in the number of pixels in the first and second regions. The inspection unit 152 judges whether or not the tool 102 can continue to be used based on the detection sensitivity value set by the user.

## Claims

1. An image processing device, comprising:
a reception unit that receives a captured image of a tool from a camera;
an area calculation unit that calculates an excess area that is an area of a region corresponding to the tool in the captured image that is at least a predetermined distance away from a tool center; and
an inspection unit that judges the suitability of the tool for continuous use based on the size of the excess area.

2. An image processing device comprising:
a reception unit that receives a plurality of captured images of a tool from a camera, the camera moving relative to a longitudinal direction of the tool; and
an area calculation unit that calculates, for each of the plurality of captured images, the number of different points between a first region including a region corresponding to the tool in the captured image and a second region including a region corresponding to the tool in the reference image,
an inspection unit that judges the suitability of the tool for continuous use based on the number of different points in each of the plurality of captured images.

3. The image processing device according to claim 2, further comprising:
an input unit that accepts a specification of detection sensitivity from a user, wherein
the inspection unit alerts that chips are entangled around the tool being inspected when the number of different points in any of the plurality of captured images exceeds a threshold that is preassigned to the specified detection sensitivity.
